# EUROPEAN PATENT APPLICATION

(11) **EP 0 700 971 A2**
(43) Date of publication of application: **13.03.1996**
(21) Application number: 95305989.6
(22) Date of filing: 29.08.1995
(51) Int. Cl.: C08L 69/00, C08L 55/02

(54) **Polycarbonate composition for moulding low glass articles**

(30) Priority: 12.09.1994 US 304713
(71) Applicant: GENERAL ELECTRIC COMPANY, Schenectady, NY 12345 (US)
(72) Inventor: Kuruganti, Vijaya Kumar, Washington, West Virginia 26181 (US); Place, Ronald Howard, Vincent, Ohio 45784 (US); Schroeder, John Robert, Mineral Wells, West Virginia 26150 (US)
(74) Representative: Szary, Anne Catherine

(57) **Abstract**

This invention is a thermoplastic molding composition that results in a molded article having a reduced gloss surface. The composition of this invention comprises in admixture an aromatic polycarbonate, a thermoplastic vinyl aromatic polymer and gloss reducing amount of nitrile rubber having a Tg of less than 0°C. The thermoplastic vinyl aromatic polymer employed herein consists of a rubber modified graft copolymer such as acrylonitrile-butadiene-styrene and an ungrafted rigid copolymer such as styrene-acrylonitrile. The nitrile rubber is preferably a poly(butadiene-co-acrylonitrile).

## Description

### BACKGROUND OF THE INVENTION

This invention is directed to a blend of thermoplastic polymers which when molded have a reduced gloss or low lustre surface for both smooth and textured surfaces. The composition of this invention is a blend of an aromatic polycarbonate, a particular vinyl aromatic polymer and a polymer having a glass transition temperature (Tg) of less than 0°C. In addition, the excellent impact properties of the composition in the molded state are not essentially affected by the addition of the particular low gloss rubber additive.

Blends of polycarbonate and a vinyl aromatic polymer such as acrylonitrile-butadiene-styrene (ABS) polymer have been known as disclosed in U.S. Patent 4,906,689('689). Such compositions, when molded, have a low gloss or low lustre surface property. However, the acrylonitrile-butadiene-styrene polymer is an emulsion polymerized very high rubber graft copolymer. It is not the thermoplastic moldable vinyl aromatic polymer employed in the present invention which is a low rubber injection moldable graft copolymer and which when molded has a high lustre or glossy surface.

Also, U.S. Patent 3,933,941('941) is directed to a polymer blend system of polyphenylene ether, an aromatic polycarbonate and a styrene resin. Essentially, the composition, is a NORYL® resin blended with a polycarbonate. NORYL® resin is a blend of polyphenylene ether and high impact polystyrene. The high impact polystyrene is a rubber modified styrene. Please see Example 1, 2, 3, 4 and 5, of the '941 patent. No where in this reference is there a disclosure of the use of vinyl aromatic polymer of this invention or the use of the reduced gloss additive system of the present invention. Also, please note column 3 lines 57-68 and column 4, lines 1-5, of the '941 patent.

Other approaches to obtaining low gloss for materials which naturally exhibit high gloss include functionalizing a butadiene or butadiene/styrene backbone or substrate onto which the other monomers are grafted. U.S. 4,612,347, for example, describes an acid functionalized graft copolymer. Other methods copolymerize a glycidyl ester with acrylonitrile, a vinyl and a rubber copolymer as described in Japanese Kokai No. 63-156847. U.S. Patent No. 4,710,534 suggests the use of an olefin rubber in combination with ABS in a polycarbonate/polybutylene terephalate blend, again wherein the ABS is a high rubber graft polymer and is not the type employed in this invention. U.S. Pat. Nos. 4,677,162, 4,624,986 and 4,526,926 all achieve low gloss by using mass or bulk polymerized ABS, again not the type employed herein. U.S. Pat. No. 4,761,463 describes the use of vinyl compounds containing glycidyl esters of unsaturated acids for low gloss surfaces. U.S. Pat. No. 4,554,316 uses epoxy and acid (anhydride) functional olefins for the same purposes.

### SUMMARY OF THE INVENTION

The present invention is directed to a blend of polymers which when molded into shaped articles have a reduced gloss or low lustre appearance, both in smooth and textured surfaces, making them desirable for use where a glossy or shiny thermoplastic resin molded surface is not wanted. The composition of this invention is a blend of a polycarbonate, a rigid moldable vinyl aromatic polymer and a particular rubber polymer having a Tg of less than 0°C. The particular rubber polymer of this invention provides the low lustre and is a nitrile rubber, such as a poly(butadiene-co-acrylonitrile) rubber having a Tg of less than 0°C. Compositions of this invention have better low gloss than when employing a blend of only polycarbonate and an impact modified vinyl aromatic polymer, namely a high rubber graft copolymer. The composition is a blend of about 10 to 90 percent by weight of polycarbonate, about 5 to 80 percent by weight of the vinyl aromatic polymer and about 1 to 20 percent by weight the gloss reducing additive. Unless otherwise stated, all percents by weight are based on the weight of the polymers making up the composition of this invention.

It was surprisingly discovered that the addition of the gloss reducing additive of this invention substantially reduces the gloss of a polycarbonate-rigid vinyl aromatic polymer system.

### DETAILED DESCRIPTION OF THE INVENTION

The blends of this invention comprise in admixture an aromatic polycarbonate, a thermoplastic rigid vinyl aromatic polymer and an amount of a thermoplastic polymer having a Tg of less than 0°C sufficient to reduce the gloss of a molded article therefrom. Preferably, the blends of this invention comprise in admixture
(a) at least one polycarbonate in an amount of about 10 percent to about 90 percent by weight, preferably about 50 percent to about 90 percent by weight thereof;
(b) at least one thermoplastic vinyl aromatic polymer in an amount of about 5 percent to about 80 percent by weight, preferably about 10 percent to about 70 percent by weight thereof; and
(c) a gloss reducing additive in an amount of about 1 percent to about 20 percent by weight, preferably about 5 percent to about 15 percent by weight thereof, in which the reducing gloss additive is a thermoplastic polymer having a Tg of less than 0°C.

The polycarbonates useful in this invention are aromatic polycarbonates and include aromatic bisphenol-A carbonate homopolymers, alkyl substituted bisphenol-A polycarbonates, halogenated bisphenol-A polycarbonates, copolymers thereof, and the polyester-polycarbonate copolymers, sometimes referred to as the high heat polycarbonates, and blends of the above. The aromatic carbonate homopolymers and their method of preparation are well know in the art as described in detail in U.S. Patents 3,028,365; 3,334,154, 3,275,601; 3,915,926; 3,030,331; 3,169,121; 3,027,814; and 4,188,314, all of which are incorporated herein by reference. The halogenated bisphenol-A that may be employed herein are preferably the chlorinated and brominated bisphenol-A, copolymers and blends thereof, or copolymers thereof with bisphenol-A or alkyl substituted bisphenol-A.

In general, the method of polymerization comprises the reaction of a dihydric phenol with a carbonyl halide (the carbonate precursor). Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins of the invention comprises a phosgenation reaction. The temperature at which the phosgenation reaction proceeds may vary from below 0° C., to above 100° C. but it is not limited to such temperatures. The phosgenation reaction preferably proceeds at temperatures of from room temperatures (25° C.) to 50° C. but may be higher. Since the reaction is exothermic, the rate of phosgene addition may be used to control the reaction temperature. The amount of phosgene required will generally depend upon the amount of the dihydric phenol and the amount of any dicarboxylic acid also present.

The dihydric phenols employed are known, and the reactive groups are the two phenolic hydroxyl groups. Typical of some of the dihydric phenols that can be employed in the practice of the present invention are bis-phenols such as (4-hydroxyphenyl) methane, 2,2-bis(4-hydroxyphenyl) propane (also known as bisphenol-A), 2,2-bis(4-hydroxy-3,5-dibromophenyl) propane; dihydric phenol ethers such as bis(4-hydroxphenyl) ether, bis(3,5-dichloro-4-hydroxyphenyl) ether; dihydroxydiphenyls such as p,p'-dihydroxydiphenyl, 3,3'-dichloro-4,4'-dihydroxydiphenyl; dihydroxyaryl sulfones such as bis(4hydroxyphenyl) sulfone, bis(3,5-dimethyl-4-hydroxyphenyl) sulfone, dihydroxy-benzenes such as resorcinol, hydroquinone, halo-and alkyl-substituted dihydroxybenzenes such as 1,4-dihydroxy-2,5 dichlorobenzene, 1,4-dihydroxy-3-methylbenzene; and dihydroxydiphenyl sulfides and sulfoxides such as bis(4-hydroxyphenyl)sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153,008; all of which are incorporated herein by reference. It is, of course, possible to employ two or more different dihydric phenols or a combination of a dihydric phenol with glycol.

The carbonate precursor can be either a carbonylhalide, a diarylcarbonate or a bishaloformate. While all of the above carbonate precursors are useful, carbonyl chloride, also known as phosgene, is preferred.

Also included within the scope of the present invention are the randomly branched polycarbonates as set forth in U.S. Pat. Nos. 3,635,895 and 4,001,184, which are incorporated herein by reference.

The aromatic carbonate polymers suitable for use in this invention include polyester-carbonates, also known as copolyester-polycarbonates, i.e., resins which contain, in addition to recurring polycarbonate chain units of the formula: 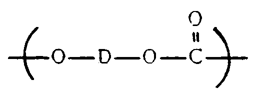
wherein D is a divalent aromatic radical of the dihydric phenol employed in the polymerization reaction, repeating or recurring carboxylate units, for example of the formula: 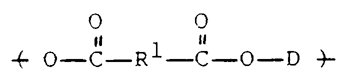
wherein D is as defined above and R¹ is an aromatic radical such as phenylene, naphthylene, biphenylene, substituted phenylene and the like; a divalent aliphatic - aromatic hydrocarbon radical such as an aralkyl or alkaryl radical; or two or more aromatic groups connected through such aromatic linkages which are known in the art.

The copolyester-polycarbonate resins are also prepared by interfacial polymerization technique, well known to those skilled in the art (see for example U.S. Pat. Nos. 3,169,121 and 4,487,896).

In general the copolyster-polycarbonate resins are prepared as described above for the preparation of polycarbonate homopolymers, but by the added presence of a dicarboxylic acid ester precursor in the water immiscible solvent.

In general, any dicarboxylic acid conventionally used in the preparation of linear polyesters may be utilized in the preparation of the copolyester-carbonate resins of the instance invention. Generally, the dicarboxylic acids which may be utilized include the aliphatic dicarboxylic acids, the aromatic dicarboxylic acids, and the aliphatic-aromatic dicarboxylic acids. These acids are well known and are disclosed for example in U.S. Pat. No. 3,169,121 which is hereby incorporated herein by reference. Mixtures of dicarboxylic acids may be employed. Therefore, where the term dicarboxylic acid is used herein it is to be understood that this term includes mixtures of two or more dicarboxylic acids.

Most preferred as aromatic dicarboxylic acids are isophthalic acid, terephthalic acids, and mixtures thereof. A particularly useful difunctional carboxylic acid comprises a mixture of isophthalic acid is in the range of from about 10:1 to about 0.2:9.8.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyl dichloride, terephthaloyl dichloride, and mixtures thereof.

The preferred polycarbonates for use in the present invention are those derived from bisphenol A and phosgene and having an intrinsic viscosity of about 0.3 to 1.0 deciliters per gram as measured in methylene chloride at 25° C.

The thermoplastic vinyl aromatic polymer employed herein is a rubber modified monovinylidene aromatic resin comprising (a) a rubber modified monovinylidene aromatic graft copolymer and (b) an ungrafted rigid copolymer, and are generally prepared by graft polymerization of a mixture of a monovinylidene aromatic monomer and one or more comonomers in the presence of one or more rubbery polymeric substrates. Depending on the amount of rubber present, a separate matrix or continuous rigid phase of ungrafted rigid (co)polymer may be simultaneously obtained along with the rubber modified monovinylidene aromatic graft polymer. The resins may also be produced by blending a rigid monovinylidene aromatic copolymer with one or more rubber modified monovinylidene aromatic graft copolymers. Typically, the rubber modified resins comprise the rubber modified graft copolymer at a level of from 5 to 50 percent by weight based on the total weight of the resin, preferably from 10 to 45 percent by weight thereof, more preferably 15 to 45 percent by weight thereof, and most preferably from 15 to 40 percent by weight thereof; and the rubber modified resins comprise the ungrafted rigid polymer at a level of from 50 to 95 percent by weight based on the total weight of the resin, preferably from 55 to 90 percent by weight thereof, more preferably from 55 to 85 percent by weight thereof and most preferably from 60 to 85 percent by weight thereof.

Monovinylidene aromatic monomers which may be employed include styrene, alpha-methyl styrene, halostyrenes i.e. dibromostyrene, mono or di alkyl, alkoxy or hydroxy substitute groups on the nuclear ring of the monovinylidene aromatic monomer i.e. vinyl toluene, vinylxylene, butylstyrene, parahydroxystyrene or methoxystyrene or mixtures thereof. The monovinylidenearomatic monomers utilized are generically described by the following formula: 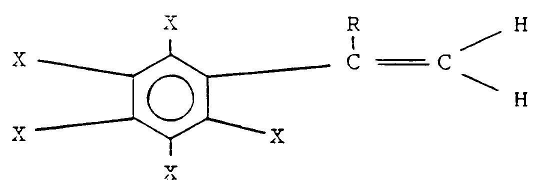
wherein X is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetrachlorostyrene, mixtures thereof and the like. The preferred monovinylidene aromatic monomers used are styrene and/or alpha-methylstyrene.

Comonomers which may be used with the monovinylidene aromatic monomer includes acrylonitrile, methacrylonitrile, C₁ and C₈ alkyl or aryl substituted acrylate, C₁ to C₈ alkyl, aryl or haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth)acrylates or mixtures thereof. The acrylonitrile, substituted acrylonitrile, or acrylic acid esters are described generically by the following formula: 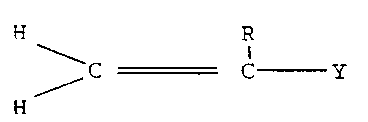
wherein R is as previously defined and Y is selected from the group consisting of cyano and carbalkoxy groups wherein the alkoxy group of the carbalkoxy contains from one or about twelve carbon atoms. Examples of such monomers include acrylonitrile, ethacrylonitrile, methacrylonitrile, alpha-chloroacrylonitrile, alpha-bromoacrylonitrile, methyl acrylate, methyl methacrylate, ethyl acrylate, butyl acrylate, propylacrylate, isopropyl acrylate and mixtures thereof. The preferred monomer is acrylonitrile and the preferred acrylic acid esters are ethyl acrylate and methyl methacrylate. It is also preferred that the acrylic acid esters, when included, are employed in combination with styrene or acrylonitrile.

The rubber modified graft copolymer comprises (i) the rubber substrate, and (ii) a rigid polymeric superstrate portion grafted to the rubber substrate. The rubber substrate is preferably present in the graft copolymer as a level of from 5 to 50 percent by weight based on the total weight of the graft copolymer, more preferably from 10 to 45 percent by weight thereof, and most preferably 15 to 40 percent by weight thereof; and the rigid superstrate is preferably present at a level of from 50 to 95 percent by weight based on the total weight of the graft copolymer, more preferably from 55 to 90 percent by weight thereof, and most preferably from 60 to 85 percent by weight thereof.

For mass polymerization, the rubber level ranges from 4 to 40 percent by weight based on the total weight of the rubber modified resin. For blends of an ungrafted rigid copolymer (such as styrene-acrylonitrile copolymer) with an emulsion high rubber graft (HRG) copolymer (such as acrylonitrile-butadiene-styrene graft copolymers), the rubber loading will typically range from 10 to 40 percent rubber based on the total weight of the rubber modified resin.

Examples of rubbery polymers for the substrate include: conjugated dienes, copolymers of a diene with styrene, acrylonitrile, methacrylonitrile or C₁ to C₈ alkyl acrylate which contain at least 50 percent (preferably at least 65 percent by weight) conjugated dienes, polyisoprene or mixtures thereof; olefin rubbers i.e. ethylene propylene copolymers (EPR) or ethylene propylene non-conjugated diene copolymers (EPDM); silicone rubbers; or C₁ or C₈ alkyl acrylate homopolymers or copolymers with butadiene and/or styrene. The acrylic polymer may also contain up to 5 percent of one or more poly- functional crosslinking agents such as alkylenediol di(meth)acrylates, alkylenetriol tri(meth)acrylates, polyester di (meth)acrylates, divinylbenzene, trivinylbenzene, butadiene, isoprene and optionally graftable monomers such as, triallyl cyanurate, triallyl isocyanurate, allyl (meth)acrylate, diallyl meleate, diallyl fumarate, diallyl adipate, triallyl esters or citric acid or mixtures of these agents.

The diene rubbers may preferably be polybutadiene, polyisoprene and copolymers of butadiene with up to 35 percent by weight of comonomers such as styrene, acrylonitrile, methylmethacrylate or C₁-C₆-alkylacrylate which are produced by aqueous radical emulsion polymerisation. The acrylate rubbers may be cross-linked, particulate emulsion copolymers substantially of C₁-C₈-alkylacrylate, in particular C₂-C₆-alkylacrylate, optionally admixture with up to 15 percent by weight of comonomers such as styrene, methylmethacrylate, butadiene, vinyl methyl ether or acrylonitrile and optionally up to 5 percent by weight of a polyfunctional crosslinking comonomer, e.g. divinylbenzene, glycol-bis-acrylates, bisacrylamides, phosphoric acid triallylester, citric acid triallylester, allylesters or acrylic acid or methacrylic acid, triallylcyanurate, triallylisocyanurate. Also suitable are mixtures of diene- and alkylacrylate rubbers and rubbers which have a so-called core/shell structure, e.g. a core of diene rubber and a shell of acrylate or vice versa.

Specific conjugated diene monomers normally utilized in preparing the rubber substrate of the graft polymer are generically described by the following formula: 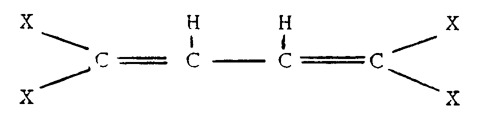
wherein X is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene, butadiene-acrylonitrile, or the like. The rubbery polymeric substrate portion must exhibit a glass transition temperature (Tg) of less than about 0°C.

Mixtures of one or more rubbery polymers previously described for preparing the monovinylidene aromatic graft polymers, or mixtures of one or more rubber modified monovinylidene aromatic graft polymers disclosed herein may also be employed. Furthermore, the rubber may comprise either a block or random copolymer. The rubber particle size used in this invention as measured by simple light transmission methods or capillary hydrodynamic chromatography (CHDF) may be described as having an average particle size by weight of 0.05 to 1.2 microns, preferably 0.2 to 0.8 microns, for emulsion based polymerized rubber latices or 0.5 to 10 microns, preferably 0.6 to 1.5 microns, for mass polymerized rubber substrates which also have included grafted monomer occlusions. The rubber substrate is preferably a particulate, moderitly crosslinked diene or alkyl acrylate rubber, and preferably has a gel content greater than 70 percent.

Preferred graft superstrates include copolymers of styrene and acrylonitrile, copolymers of alpha-methylstyrene and acrylonitrile and methylmethacrylate polymers or copolymers with up to 50 percent by weight of C₁-C₆ alkylacrylates, acrylonitrile or styrene. Specific examples of monovinylidene aromatic graft copolymers include but are not limited to the following: acrylonitrile-butadiene-styrene (ABS), acrylonitrile-styrene-butyl acrylate (ASA), methylmethacrylate-acrylonitrile-butadiene-styrene (MABS), acrylonitrile-ethylene-propylene-non-conjugated diene-styrene (AES).

The ungrafted rigid polymers (typically free of rubber) are resinous, thermoplastic polymers of styrene, alpha-methylstyrene, styrenes substituted in the nucleus such as para-methylstyrene, methyl acrylate, methylmethacrylate, acrylonitrile, methacrylonitrile, maleic acid anhydride, N-substituted maleimide, vinyl acetate or mixtures thereof. Styrene/acrylonitrile copolymers, alpha-methylstyrene/acrylonitrile copolymers and methylmethacrylate/acrylonitrile copolymers are preferred.

The ungrafted rigid copolymers are known and may be prepared by radical polymerisation, in particular by emulsion, suspension, solution or bulk polymerisation. They preferably have number average molecular weights of from 20,000 to 200,000 and limiting viscosity number [ η ] of from 20 to 110 ml/g (determined in dimethylformamide at 25°C).

The number average molecular weight of the grafted rigid superstrate of the monovinylidene aromatic resin is designed to be in the range of 20,000 to 350,000. The ratio of monovinylidene aromatic monomer to the second and optionally third monomer may range from 90/10 to 50/50 preferably 80/20 to 60/40. The third monomer may optionally replace 0 to 50 percent of one or both of the first and second monomers.

These rubber modified monovinylidene aromatic graft polymers may be polymerized either by mass, emulsion, suspension, solution or combined processes such as bulk-suspension, emulsion-bulk, bulk-solution or other techniques well known in the art. Furthermore, these rubber modified monovinylidene aromatic graft copolymers may be produced either by continuous, semibatch or batch processes.

The gloss reducing additive of this invention is a single elastomeric copolymer containing nitrile units. Commercially available copolymers of this type are generically designated "nitrite rubbers". Nitrite rubbers are generally copolymers of acrylonitrile with at least one conjugated diene such as butadiene, isoprene, chloroprene and 1,3-hexadiene, and may also contain structural units derived from acidic monomers such as acrylic acid or methacrylic acid, but which do not include styrene or styrene derivatives. They typically contain about 20-50 percent (by weight) nitrile structural units and optionally about 2-10 percent acidic structural units, and have Mooney viscosities in the range of about 20-150 at 100°C.

Various acrylonitrile-butadiene rubbers suitable for use in the invention are available from Zeon Chemicals under the trademark NIPOL®. The following grades are illustrative; all percentages are by weight and are approximate.

| Grade | Acrylonitrile units, % |
|---|---|
| 1453 | 29 |
| 1053 | 27 |
| VT330 | 41 |
| 1452X8 | 33 |

The compositions of this invention may also contain non-resinous materials. For example, the addition of antimony trioxide may under certain conditions improve the strand strength of the composition upon extrusion. Various known fillers may be incorporated therein, typically in amounts up to about 25 parts per 100 parts of resin, with a particular preference being expressed for glass fibers since they often impart high modulus and tensile strength at both high and low temperatures. It is believed that a chemical coupling effect of some kind takes place between the resinous composition and the surface of the glass fiber, although the invention is not dependent on the presence or absence of such effect.

The compositions of this invention are injection moldable but may also be extruded into profiles or sheets. The sheets may be subsequently thermo-formed or vacuum-formed. The formed thermoplastic articles precared from the compositions of this invention have low gloss or low lustre surfaces, as well as retaining excellent properties of the polycarbonate and ABS blends.

The following examples are provided to illustrate various embodiments of this invention. They are for the purpose of illustration only, and should not be regarded as limiting the invention to any of the specific materials or conditions described therein.

### EXAMPLES 1-5

Examples were prepared by melt blending the compositions set forth in the table below in a twin screw extruder at 220°-270°C and about 100-200 rpm. The blended material was extruded and pelletized. The pelletized compositions were dried at about 110°C in an air circulating oven for about 4 hours and then injection molded at about 240°C into test specimens for testing for gloss and impact. The gloss was measured by ASTM test method D-1003, which is a measure of reflected light at a 60° angle using a Gardner gloss meter. Other injection molded test specimens were tested for notched Izod impact in accordance with ASTM test procedure D256 using 1/8" thick test specimens.

In addition, test specimens were injection molded for Dynatup impact testing. The Dynatup impact testing procedure was in accordance with ASTM test procedure D 3763-86 using the Dynatup impact testing equipment by General Research Instruments. Briefly, the test procedure involves subjecting samples to a falling dart impact. The dart is about a 0.5" diameter rod about 1.5" long and has a rounded, blunt end, which is the end that impacts upon the sample. The molded sample, which is about 4" in diameter and 1/8" thick, is clamped in a holding device. The dart is on a vertical sled or shaft, with weights added if necessary for impact determination. The test is designed to force failure of the sample in order to determine the type of failure occurring. The average velocity of the falling dart was about 11.3 feet per record, and the impact energy was about 100 foot-pounds with a drop height of about two feet.

The results obtained are reported in the following Tables.

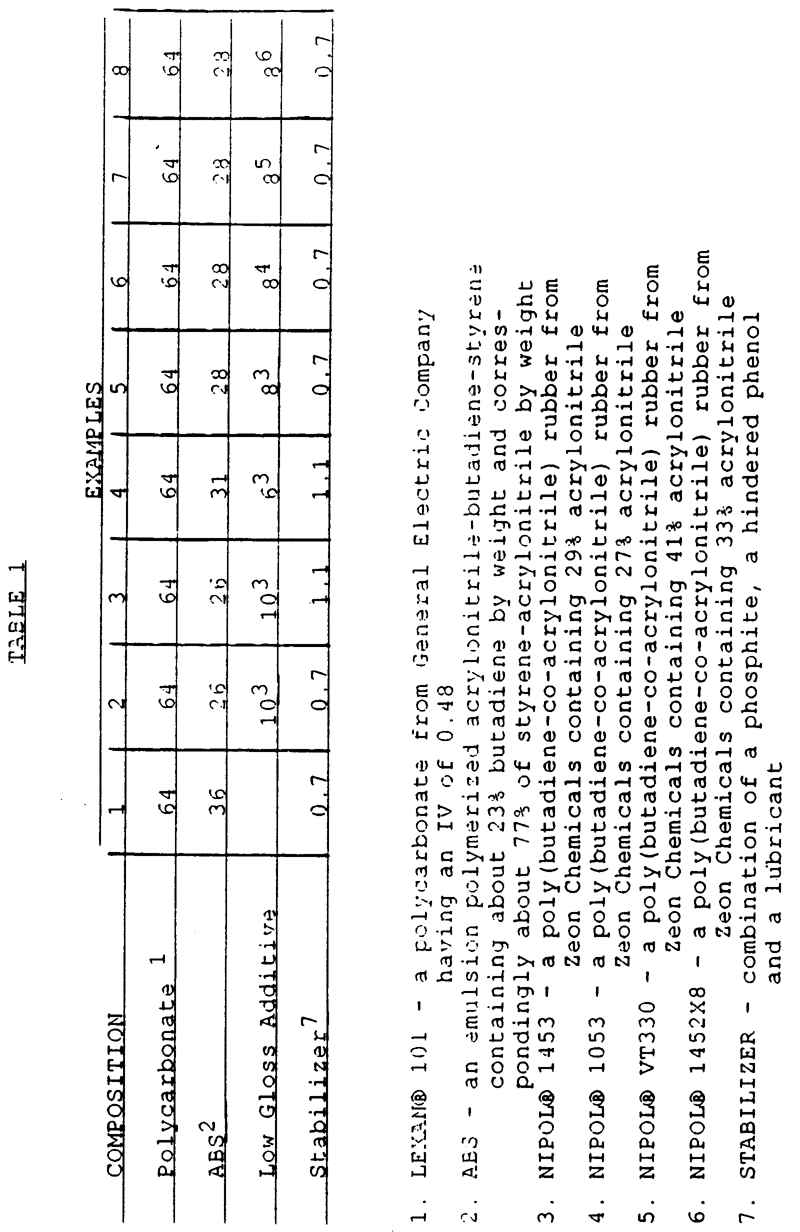

The test results obtained are reported in Table 2 below.

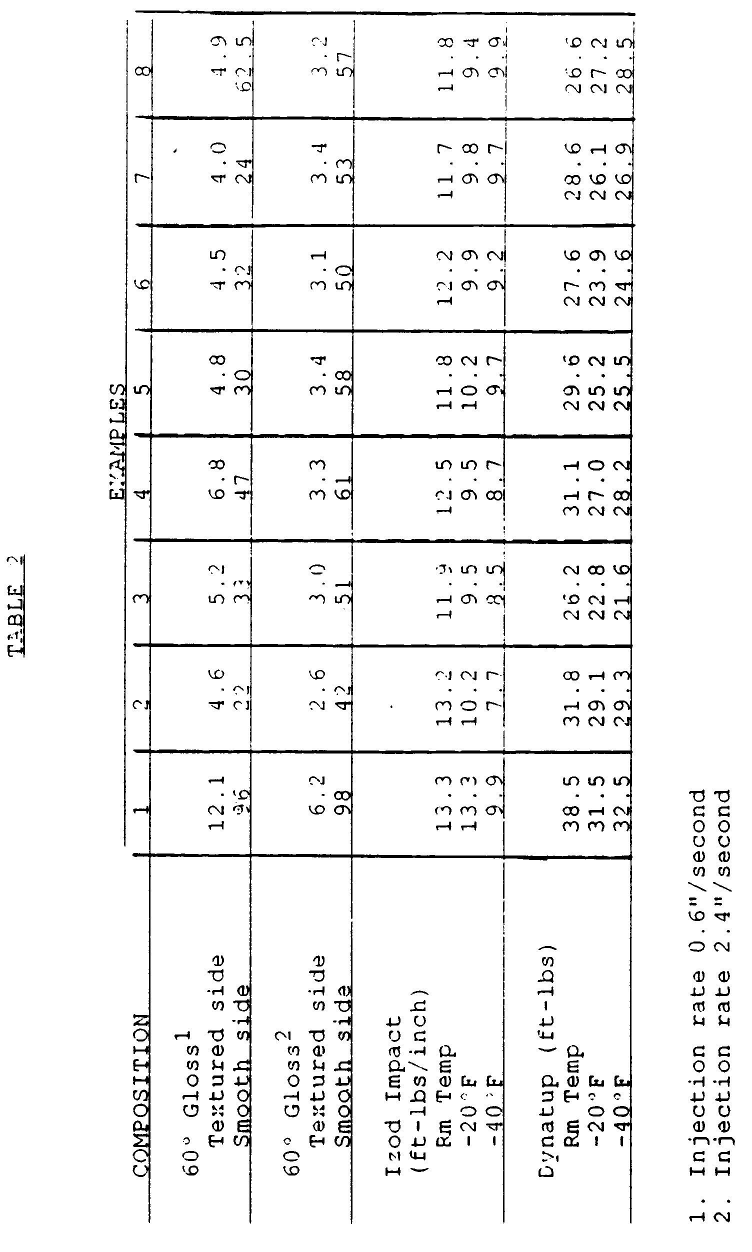

From the above Examples, the test results clearly show that there is a significant drop in gloss with the compositions of this invention over a thermoplastic composition of polycarbonate and ABS. The compositions of this invention while still maintaining its excellent impact properties of the polycarbonate/ABS blend as shown by the Izod and Dynatup impact tests.

Obviously, other modifications and variations of the invention are possible in the light of the above disclosures. It is to be understood, however, that changes may be made in the particular embodiments of this invention so described herein which are within the full intended scope of the invention as defined by the appended claims:

## Claims

1. A reduced gloss thermoplastic composition comprising in admixture an aromatic carbonate polymer, a thermoplastic vinyl aromatic polymer and a nitrile rubber having a Tg of less than 0°C in an amount sufficient to provide a molded thermoplastic article having a reduced gloss surface.

2. The reduced gloss thermoplastic composition of claim 1 comprising in admixture
(a) from about 10 percent to about 90 percent by weight of the aromatic carbonate polymer; and
(b) from about 5 percent to about 80 percent by weight of the thermoplastic vinyl aromatic polymer; and
(c) from about 1 percent to about 20 percent by weight of nitrile rubber having a Tg less than 0°C,
said weight percents being based on the total weight of (a), (b) and (c).

3. A reduced gloss thermoplastic composition consisting essentially of in admixture an aromatic polycarbonate, a thermoplastic vinyl aromatic polymer and a nitrile rubber polymer having a Tg less than 0°C in an amount sufficient to provide a molded thermoplastic article having a reduced gloss surface.

4. The reduced gloss thermoplastic composition of claim 3 consisting essentially of in admixture
(a) from about 10 percent to about 90 percent by weight of the aromatic polycarbonate; and
(b) from about 5 percent to about 80 percent by weight of the thermoplastic vinyl aromatic polymer; and
(c) from about 1 percent to about 20 percent by weight of a nitrile rubber having a Tg of less than 0°C,
said percentage by weight being based on the total weight of (a), (b) and (c).

5. The reduced gloss thermoplastic composition of any preceding claim wherein the gloss of an article molded therefrom is less than 65 as determined by ASTM procedure D-1003.

6. The composition of claim 5 wherein the gloss is less than 60.

7. The composition of claim 5 wherein the gloss is less than 50.

8. The reduced gloss thermoplastic molding composition of any preceding claim wherein the aromatic carbonate polymer is selected from the group consisting of a carbonate homopolymer, a copolyether-polycarbonate copolymer, a halogenated polycarbonate, and mixtures thereof.

9. The reduced gloss thermoplastic composition of claim 8 wherein the aromatic carbonate polymer is a carbonate homopolymer.

10. The reduced gloss thermoplastic molding composition of any preceding claim wherein the thermoplastic vinyl aromatic polymer comprises about 5 to about 50 weight percent of a rubber modified graft copolymer and correspondingly about 95 to about 50 weight percent of an ungrafted rigid polymer, said weight percents being based on the weight of the vinyl aromatic polymer.

11. The composition of claim 10 wherein the rubber modified graft copolymer comprises a rubber substrate and a rigid polymeric superstrate grafted to the rubber substrate.

12. The composition of claim 10 wherein the rubber modified graft copolymer is a graft copolymer of styrene-butadiene-acrylonitrile.

13. The composition of claim 10 wherein the ungrafted rigid polymer is a styrene-acrylonitrile copolymer.

14. The composition of any preceding claim wherein the nitrile rubber is a copolymer of acrylonitrile and at least one conjugated diene.

15. The composition of claim 14 wherein at least one conjugated diene is butadiene.
